(19) **Europäisches Patentamt European Patent Office Office européen des brevets**

(11) **EP 1 549 910 B1**

(12) **FASCICULE DE BREVET EUROPEEN**

(45) Date de publication et mention de la délivrance du brevet:
**07.12.2016 Bulletin 2016/49**

(21) Numéro de dépôt: **03798960.5**

(22) Date de dépôt: **07.10.2003**

(51) Int Cl.:
*G01D 5/12* *(2006.01)*        *G01D 5/14* *(2006.01)*

(86) Numéro de dépôt international:
**PCT/FR2003/002949**

(87) Numéro de publication internationale:
**WO 2004/031693 (15.04.2004 Gazette 2004/16)**

(54) **CAPTEUR DE POSITION A RELUCTANCE VARIABLE**

POSITIONSSENSOR MIT VARIABLER RELUKTANZ

VARIABLE RELUCTANCE POSITION SENSOR

(84) Etats contractants désignés:
**CH DE FR GB IT LI**

(30) Priorité: **07.10.2002 FR 0212425**

(43) Date de publication de la demande:
**06.07.2005 Bulletin 2005/27**

(73) Titulaire: **Moving Magnet Technologies 25000 Besançon (FR)**

(72) Inventeurs:
• **FRACHON, Didier F-25000 Besançon (FR)**

• **GANDEL, Pierre F-25660 Montfaucon (FR)**

(74) Mandataire: **IP Trust 2, rue de Clichy 75009 Paris (FR)**

(56) Documents cités:
EP-A- 0 273 481        DE-A- 10 009 173
DE-A- 19 503 075        FR-A- 2 735 222
US-A- 3 061 771        US-A- 4 785 242

**Description**

La présente invention concerne un dispositif et un procédé de capteur de position analogique à réluctance variable. Elle s'applique en particulier, mais non exclusivement, aux dispositifs aptes à mesurer une variation d'entrefer entre une cible ferromagnétique et un capteur, la cible ferromagnétique se déplaçant de façon linéaire où rotative en face du capteur.

D'une manière générale, l'invention consiste en un capteur rotatif ou linéaire sans contact permettant d'obtenir une variation d'induction très linéaire et avec un maximum de sensibilité. Elle peut trouver une application toute particulière dans la mesure de niveau d'un liquide dans un réservoir, la cible étant placée à l'intérieur du réservoir contenant le liquide et l'aimant étant situé à l'extérieur, mesurant ainsi la position de la cible au travers des parois du réservoir.

Dans la suite, afin de mieux comprendre l'invention et les dispositifs de capteurs magnétiques, il est important de comprendre la notion de « zéro Gauss ».

La position de mesure délivrant un signal égal à zéro Gauss correspond en effet au point de plus haute stabilité et sensibilité. Il n'y a pas un "offset", c'est-à-dire un écart significatif par rapport à zéro gauss, à amplifier, seul le signal utile est à traiter ce qui permet un gain plus important du point de vue électronique, ce qui conduit à un rapport signal sur bruit plus favorable. De plus, un dispositif de compensation de température est nécessaire pour compenser l'évolution réversible des propriétés magnétiques de l'aimant. La variation de sensibilité du capteur en fonction de la température doit être compensée, mais la compensation appliquée ne peut pas être parfaite et l'influence de ces erreurs de compensation sera d'autant plus faible que l'induction mesurée est faible.

À l'heure actuelle, il existe des dispositifs de capteurs rotatifs permettant d'obtenir une excellente linéarité, c'est-à-dire de $\pm$ 0.5%, mais sur des courses de plage angulaire réduite.

Ainsi, on connaît déjà le brevet N° FR 2670286, déposée au nom de la demanderesse, qui décrit un capteur de position comportant un stator définissant un entrefer à l'intérieur duquel se déplace un aimant mobile solidaire d'un moyen d'accouplement. Le capteur comporte une sonde de Hall mesurant la variation de l'induction dans l'entrefer. Le stator est constitué par une première partie fixe et une deuxième partie qui est soit fixe, soit mobile, les deux parties définissant entre elles un entrefer principal dans lequel se déplace la partie de l'organe mobile. L'organe mobile présente au moins deux parties minces adjacentes aimantées transversalement en sens alterné, les parties aimantées étant réalisées en un matériau présentant dans tout le domaine de travail une caractéristique de désaimantation pratiquement linéaire et une perméabilité réversible proche de celle de l'air. La partie fixe présente au moins deux entrefers secondaires sensiblement perpendiculaires à l'entrefer principal dans lequel se déplace l'organe mobile. La sonde de Hall est logée dans l'un desdits entrefers secondaires.

On connaît le brevet N° EP 0665416, également déposée au nom de la demanderesse, qui décrit un capteur magnétique de position du type comportant un aimant permanent mince de forme tubulaire aimanté radialement, solidaire d'un axe d'accouplement, ledit aimant permanent étant mobile en rotation dans un entrefer principal cylindrique défini par une culasse et un stator en un matériau magnétique doux, le stator présentant un entrefer secondaire à l'intérieur duquel est disposé une sonde de Hall, caractérisé en ce que le stator est disposé coaxialement à l'intérieur de l'aimant permanent, et en ce que la culasse assurant la fermeture du flux magnétique engendré par l'aimant permanent est formée par une pièce tubulaire coaxiale avec l'aimant et le rotor.

On trouve également sur le marché des dispositifs de capteurs à sortie numérique et non pas analogique. De tels capteurs sont généralement utilisés pour la détection, c'est-à-dire la présence ou l'absence, d'une cible ferromagnétique dentée. Le signal de sortie de ce type de capteur n'est pas proportionnel à la position, linéaire ou angulaire, de cette cible ferromagnétique car il comporte uniquement deux états, noté habituellement 1 ou 0, en fonction de ce qui se trouve à proximité du capteur. Relativement à ce type de dispositifs, les brevets N°FR2735222 et N°FR2734913 divulguent un capteur de proximité d'une pièce ferromagnétique à effet Hall. Le brevet N°FR2724722, déposée au nom de la demanderesse, décrit lui aussi un dispositif permettant la détection, c'est-à-dire uniquement la présence ou l'absence, d'une cible ferromagnétique dentée.

On connaît dans l'art antérieur le brevet US 4785242 qui décrit une solution de capteur angulaire présentant un rotor de section variable assurant une fonction de transfert entre la position angulaire et le signal de sortie. Par contre, il ne divulgue pas la caractéristique selon laquelle la sonde de Hall est logée dans une cavité de l'aimant permanent.

La demande de brevet DE 19503075 décrit un arrangement mécanique pour positionner la sonde. Cette demande de brevet ne divulgue en rien un Capteur de position analogique à réluctance variable cherchant à créer un zéro Gauss.

Grâce à la cavité créée dans l'aimant permanent dans le dispositif selon l'invention, une partie des lignes de champs s'écoulent à travers la cavité conduisant à un champ « négatif » tandis que l'autre partie des lignes de champs s'écoule à l'extérieur de l'aimant conduisant à un champ « positif », entre ces deux champs se situe le point de zéro Gauss. Grâce au zéro gauss, on obtient :

- la stabilité en température : O Gauss = O Gauss à toutes températures,

- une meilleure amplification du signal car pas de mode commun à amplifier.

Les solutions techniques divulguées dans les brevets ci-dessus peuvent donner satisfaction dans leur application particulière, mais l'inconvénient majeur de ces dispositifs réside dans le fait que la fonction de mesure de la position angulaire par une variation de l'induction magnétique présente une course maximale de seulement $\pm$ 90° autour de la position zéro Gauss.

Ainsi, il n'existe à l'heure actuelle aucun dispositif de capteur magnétique de position analogique, et non pas numérique, apte à déterminer la position d'une cible ferromagnétique sur une course réalisant un tour complet, soit 360°.

L'invention a donc plus particulièrement pour but de supprimer cette lacune. Elle propose à cet effet un capteur de position analogique à réluctance variable, destiné à déterminer la variation de position d'une cible, comprenant une cible, constituée d'un matériau ferromagnétique et au moins un aimant, la cible et l'aimant définissant entre eux un entrefer, le dispositif comportant en outre un élément magnéto-sensible détectant la variation d'induction occasionnée dans l'entrefer par le déplacement relatif de la cible par rapport à l'aimant caractérisé en ce que l'aimant est aimanté selon une direction sensiblement perpendiculaire à la surface avant de l'aimant délimitant un bord de l'entrefer, ledit aimant présentant une cavité s'ouvrant sur ladite surface avant de l'aimant, l'élément magnéto-sensible étant logé dans ladite cavité. au plus près du point de «zéro gauss», la cible présentant une configuration géométrique déterminée pour que la variation d'induction en fonction de ladite position de la ciblecorresponde à une fonction prédéfinie la cible (1) p résentant une forme particulière, ou optimisée, apte à fournir une induction B linéaire en fonction du déplacement de ladite cible (1).

Grâce à ces particularités, l'invention permet donc de fabriquer très simplement des capteurs aussi bien linéaires que rotatifs permettant d'avoir une excellente linéarité et des courses maximales proches de 360° pour les capteurs rotatifs avec une induction moyenne, ou initiale, à mesurer proche du zéro Gauss.

Par ailleurs, le dispositif selon l'invention présente un coût de fabrication nettement moins élevé et une grande variété de capteurs avec différentes formes ou géométrie de cible, aussi bien pour des applications de capteur linéaire que rotatif.

De préférence, le susdit aimant présentera une forme en U.

Selon une possibilité offerte par l'invention, la cible sera mobile en rotation autour d'un axe perpendiculaire à l'axa d'aimantation dudit aimant.

Selon une autre possibilité offerte par l'invention, la cible sera mobile en rotation autour d'un axe parallèle à l'axe d'aimantation dudit aimant.

Selon un aspect avantageux de l'invention, le plan dans lequel s'effectue le déplacement de la cible est compris dans un plan passant par le centre de l'élément magnéto-sensible.

Avantageusement, l'élément magnéto-sensible sera logé dans une cavité, ou logement, de l'aimant.

De la même manière, la cible se déplacera suivant un axe perpendiculaire à l'axe d'aimantation du susdit aimant.

Selon une possibilité offerte par l'invention, l'élément magnéto-sensible pourra être une sonde de Hall. De la même manière, cet élément magnéto-sensible pourra également être une magnétorésistance.

Avantageusement, le dispositif de l'invention comportera une pièce ferromagnétique collée au dos du susdit aimant.

Le susdit aimant pourra également se présenter sous la forme de demi-aimants collés sur une pièce ferromagnétique en forme en T.

Par ailleurs, selon une possibilité offerte par l'invention, l'élément magnéto-sensible pourra être une sonde du type "intelligente", telle que par exemple une sonde "HAL 855 - Micronas", dont la tension de sortie est une fonction programmable. Dans ce cas, la cible pourra présenter une forme quelconque, c'est-à-dire qu'elle ne nécessitera pas d'être réalisée, ou formée, grâce au procédé de réalisation d'une cible selon l'invention ci-dessous.

Selon un aspect particulièrement intéressant de l'invention, l'élément magnéto-sensible pourra présenter une induction moyenne, ou initiale, proche de zéro Gauss.

La présente invention se rapporte également à un procédé pour la réalisation d'une cible, constituée par un matériau ferromagnétique, présentant un signal d'induction B désiré, destiné à être employé dans un dispositif de capteur magnétique de position analogique linéaire ou rotatif comportant ladite cible, un aimant associé à un élément magnéto-sensible, caractérisé en ce qu'il comprend les étapes suivantes :

- établissement d'une première forme géométrique pour la susdite cible,
- positionnement de points sur la cible ; ces points présentant des coordonnées (x,y) dans un plan voire des coordonnées spatiales (x, y, z),
- calcul du signal d'induction magnétique B en fonction du déplacement linéaire ou rotatif de la cible ; le déplacement de la cible étant effectué sur un parcours prédéfini,
- modification des coordonnées d'un des susdits points et re-calcul de l'induction B en fonction de la position de la cible pour déterminer l'influence de ce point sur l'induction B mesurée par le susdit aimant,

- détermination d'une matrice et résolution d'une équation apte à définir la nouvelle forme géométrique de la susdite première forme définie préalablement pour la cible,
- répétition des susdites étapes de calcul, modification et détermination jusqu'à l'obtention d'une induction magnétique B, en fonction du déplacement linéaire ou rotatif de la cible, satisfaisant, c'est-à-dire conforme aux critères de linéarité ou d'une fonction f(x) non linéaire souhaités.

On comprendra mieux l'invention à l'aide de la description, faite ci-après à titre purement explicatif, de modes de réalisation de l'invention, en référence aux figures annexées :

- la figure 1 illustre un exemple de réalisation d'un dispositif selon l'invention apte à obtenir un signal linéaire de 3 x 120° ;

- la figure 2 est une vue de dessus du dispositif représenté sur la figure 1 ;

- la figure 3 est un dispositif selon l'invention comportant une cible à déplacement linéaire ;

- la figure 4 illustre un graphe relatif à l'induction B du dispositif représenté sur la figure 3 ;

- la figure 5 est un dispositif selon l'invention comportant une cible à déplacement rotatif ;

- la figure 6 illustre un graphe relatif à l'induction B du dispositif représenté sur la figure 5 ;

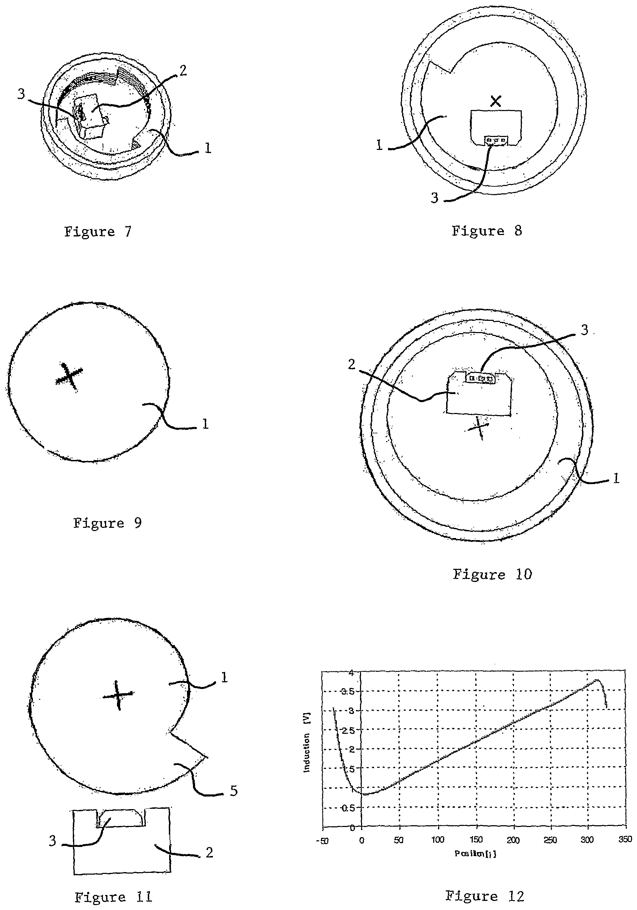

- la figure 7 est une vue en perspective du dispositif représenté sur la figure 1 à l'exception du fait que l'aimant qui se situe à l'intérieur de la cible ;

- la figure 8 est une vue de dessus du dispositif représenté sur la figure 7 ;

- la figure 9 est une vue de dessus d'un dispositif selon l'invention dans lequel la cible présente une forme cylindrique et se déplace suivant rotation excentrée permettant d'obtenir un signal de 2 x 180° ;

- la figure 10 illustre le même dispositif que celui de la figure 9 à l'exception du fait que l'aimant qui se situe à l'intérieur de la cible ;

- la figure 11 est une vue de dessus d'un dispositif selon l'invention, dans lequel la cible est rotative, permettant d'obtenir un signal linéaire sur 360° ;

- la figure 12 est un graphe relatif à la variation du signal d'induction telle que perçue par le dispositif selon l'invention pour un tour complet de la cible, soit sur 360° ;

- la figure 13 représente une cible présentant un profil plan, situé face au dispositif selon l'invention, et se déplaçant linéairement face au dit dispositif ;

- la figure 14 illustre un graphe relatif à l'induction perçue par l'élément magnéto-sensible du dispositif et le signal de sortie corrigé, c'est-à-dire rendu linéaire, par une sonde "intelligente" programmable, telle qu'une sonde HAL 855, en fonction de la position de la cible représentée sur la figure 13 ;

- la figure 15 est une vue en coupe d'un aimant présentant une forme en U comportant un logement

parallélépipédique au centre duquel se situe le point de "zéro gauss" ;

- la figure 16 illustre un mode d'exécution du dispositif selon l'invention. Dans ce mode de réalisation particulier la cible est constituée d'une membrane ferromagnétique déformable, qui sous l'effet d'une force ou d'une pression, modifie l'entrefer entre la susdite cible et l'aimant capteur.

- la figure 17 représente une vue en perspective de l'aimant installé sur une pièce polaire ferromagnétique en forme de T pour permettre d'obtenir une position 0 Gauss.

Un des principes de l'invention est de créer une variation d'induction analogique de valeur moyenne faible, soit quelques centaines de Gauss, qui consiste en une fonction de la position, linéaire ou angulaire, d'une pièce ferromagnétique et qui est exploitable par un élément magnéto-sensible.

Comme cela est visible sur les différentes figures, le capteur de position analogique à réluctance variable, destiné à déterminer la position d'une cible 1 comprend ladite cible 1 en matériau ferromagnétique, présentant une perméabilité supposée infinie, un aimant 2 permanent et un élément sensible au sens et à l'intensité d'un champ magnétique, dénommé dans la suite "élément magnéto-sensible" 3, tel que par exemple une sonde de Hall, disposée dans l'entrefer formé entre l'aimant 2 et la cible 1.

L'aimant 2 est un aimant présentant deux pôles, un des pôles étant dirigé du côté de l'entrefer, sur la surface de l'aimant formant le bord de l'entrefer, l'autre pôle étant sur le côté opposé.

L'aimantation est orientée selon une direction perpendiculaire à ces deux côtés, dans un sens ou dans l'autre. L'aimantation est perpendiculaire à la surface de l'aimant dirigée vers l'entrefer.

Dans le cas d'une cible mobile en translation selon un plan sensiblement parallèle aux surfaces polaires de l'aimant, la variation d'induction résulte de la variation de l'entrefer, c'est-à-dire de l'espace compris entre la section de la cible 3 et la section de l'aimant 1 se faisant face. Cette variation résulte de la configuration géométrique de la cible, déterminée par calcul ou par expérimentation pour que la distance entre la surface de la cible et l'aimant varie en fonction de la position relative sur la trajectoire de translation, selon une courbe déterminée.

Dans le cas d'une cible mobile en translation selon une direction axiale, c'est-à-dire perpendiculairement aux surfaces polaires de l'aimant, la variation d'induction résulte de la position axiale de la cible par rapport à l'aimant.

Dans le cas d'une cible mobile en rotation selon un plan sensiblement parallèle aux surfaces polaires de l'aimant, la variation d'induction résulte de la variation de l'épaisseur de la cible selon la direction radiale.

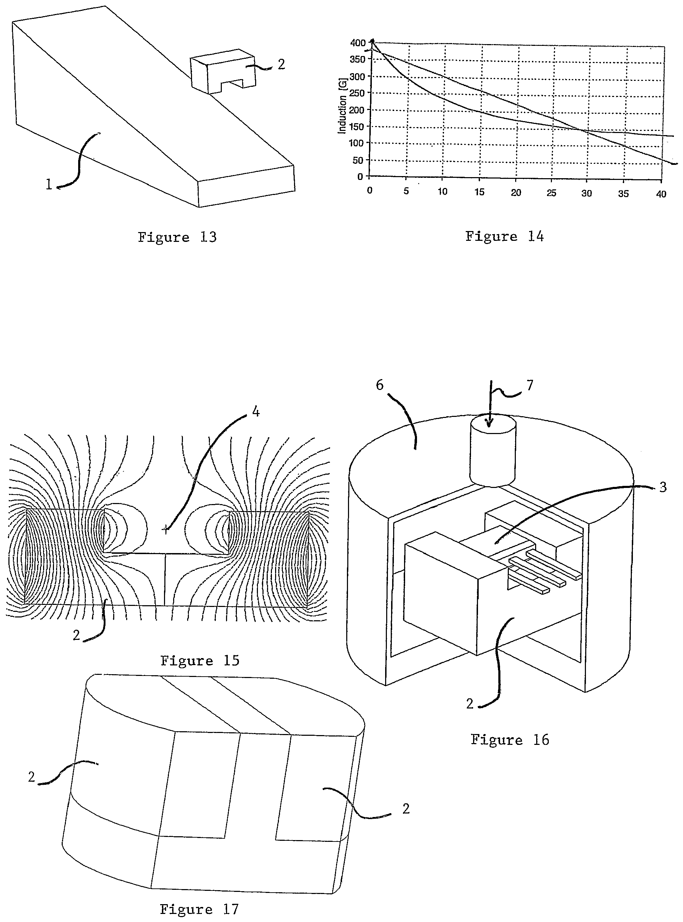

L'élément magnéto-sensible 3 de la sonde est placé au plus près du point de "zéro gauss" 4, tel que cela est illustré sur la figure 15 pour une configuration sensiblement en U de l'aimant 2. On pourra également concevoir un aimant 2 collé sur une pièce ferromagnétique présentant une forme en T comme illustré en figure 17. Dans les deux cas, grâce à la forme de l'aimant 2, il est possible d'obtenir une position à l'intérieur de l'aimant telle que l'induction soit relativement proche de zéro gauss.

La valeur de l'induction va être modifiée par la présence de la cible et cette modification sera directement liée à l'entrefer entre la cible et l'ensemble aimant/élément magnéto-sensible.

Dans les différents cas illustrés sur les figures, le déplacement de la cible 1 se fait suivant un axe sensiblement perpendiculaire à l'aimantation de l'aimant 2.

Le profil de la cible 1 dans le plan considéré peut être apparenté à une fonction de type $Z = f(x)$. L'induction magnétique générée par l'aimant 2 en un point A donné de son axe Z est alors une fonction linéaire de type $B = k*x + b$. Le profil de la cible 1 est obtenu par un couplage entre un logiciel de simulation magnétique et un algorithme mathématique d'optimisation de forme, grâce auxquels le procédé de l'invention est réalisé.

Dans la présente invention, l'optimisation de la cible 1 n'est pas obligatoirement nécessaire, en effet il est possible d'utiliser une cible 1 ferromagnétique de forme simple en combinant l'aimant 2 à une sonde « intelligente », telle que du type HAL 855 - Micronas, qui permet de programmer le signal de sortie afin d'obtenir une fonction quelconque en particulier linéaire en fonction du déplacement, la table de valeur étant préalablement stockée dans la sonde.

Pour l'industriel et l'homme du métier, cette invention permet pour une cible 1 donnée de renvoyer un signal linéaire, mais cette invention permet également de renvoyer n'importe quel type de signal, il suffit pour cela d'adapter la forme de la cible 1 au signal de sortie souhaité ou plus simplement de programmer une sonde « intelligente », par exemple du type "MICRONAS HAL 855", avec la fonction adéquate.

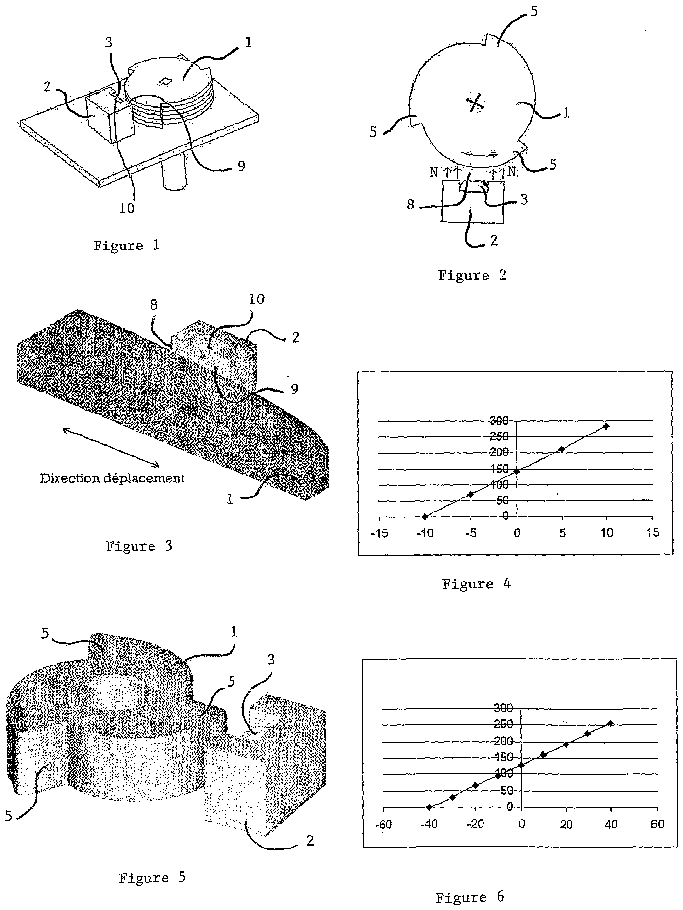

Dans un exemple choisi pour illustrer l'invention et représenté sur la figure 3, le dispositif selon l'invention comprend une cible de 40 mm de longueur. Grâce au procédé de réalisation d'une cible présentant un profil ou une forme adapté(e), le résultat de l'induction perçue par l'ensemble aimant/élément magnéto-sensible lors du déplacement de la cible 1 en cinq points sur une plage de vingt millimètres, représenté sur la figure 4, consiste en une droite parfaite correspondant à une excellente linéarité de l'induction en fonction du déplacement.

Bien entendu, de façon pratique, si l'on choisit une cible 1 présentant une telle longueur, une course plus importante pourra être obtenue.

Dans le cas illustré sur la figure 5, le dispositif de l'invention comprend une cible 1 présentant trois dents spiralées 5, disposées chacune à un angle de 120°, de 20 millimètres de longueur. On pourra également envisager des cibles 1 présentant une, deux ou plus de trois dents spiralées 5, afin d'obtenir une induction particulière.

Sur la figure 6 sont représentés les résultats quant à l'induction de l'ensemble aimant/élément magnéto-sensible, lors du déplacement de la cible 1 en neuf points sur une plage de 80°. On obtient, à l'identique de précédemment, une excellente linéarité sur cette plage de déplacement.

Comme cela est visible sur la figure 16, selon un mode d'exécution de l'invention, l'ensemble aimant 2 et élément magnéto sensible 3 est disposé en face d'une membrane ferromagnétique 6 pouvant se déformer sous l'effet d'une force 7 appliquée verticalement par rapport à ladite membrane 6. La force 7 appliquée induit donc une déformation de la susdite membrane 6 qui modifie alors l'entrefer entre cette membrane 6 et l'ensemble aimant/élément magnéto-sensible.

Cette variation d'entrefer va produire une variation d'induction au niveau de l'élément magnéto sensible 3 qui pourrait être reliée à la force appliquée sur la susdite membrane. Ce capteur peut être utilisé notamment dans des applications de mesure de masse pour les sièges d'automobiles.

Un des buts de la présente invention est de proposer une cible 1 ferromagnétique présentant une réponse linéaire de l'induction de l'ensemble aimant/élément magnéto-sensible. Ainsi, la présente invention propose un procédé apte à former, ou définir, la forme géométrique adéquate de cette cible de manière à obtenir la susdite réponse linéaire. Bien entendu, il est à l'heure actuelle intéressant et souhaitable dans nombre d'applications d'obtenir une linéarité de l'induction, cependant toutes autres formes de cette induction pourront être réalisées, jusqu'à des courbes, ou tracés, d'induction très particuliers.

Ainsi, initialement, une forme géométrique est choisie pour la cible 1 et l'on définit la forme, ou configuration, extérieure de la cible, c'est-à-dire faisant face à l'ensemble aimant/élément magnéto-sensible, par l'intermédiaire d'une fonction "spline" passant par n points p définis par leurs coordonnées (x, y). La forme du profil de la cible 1 faisant face à l'ensemble aimant/élément magnéto-sensible sera idéalement choisie initialement pour approcher au mieux, selon l'homme du métier, la forme finale dudit profil.

L'induction perçue par l'élément magnéto-sensible du dispositif selon l'invention est simulée pour k positions (k > 1), linéaire ou angulaire, de la cible. À l'aide de ces k valeurs, il est défini une fonctionnelle du type suivant :

$$J(p) = \sum \left| I(x_k, \ p) \ - \ f(x_k) \right|$$

Cette fonctionnelle permet de quantifier l'écart entre les valeurs d'induction simulées $I(x_k, p)$ et une fonction $f(x_k)$ que nous souhaitons obtenir.

L'étape suivante permet de quantifier l'influence des n points de la cible 1 sur l'induction perçue par l'élément magnéto-sensible 3 pour les k positions de la susdite cible 1. Chacun des n points de la cible 1 est modifié et le calcul de l'induction perçue par l'élément magnéto-sensible 3 est réalisée à nouveau avec cette nouvelle cible 1 pour les k positions, linéaires ou angulaires, de la cible 1. Ainsi, il est obtenu une matrice A de dimensions k * (n+1) définie avec les k valeurs d'induction simulées par les (n+1) cibles 1. Il reste à résoudre l'équation ci-dessous pour trouver le vecteur d (n composantes) qui correspond à la déformation à appliquer à la cible pour tendre vers le signal de sortie choisi.

$$(A^tA \ + \ \lambda I) \ d \ = \ -A^t\phi(p) \ \text{avec} \ \phi_k(p) \ = \ \left| I(x_k, p) \ - \ I_k \right|$$

Les étapes sont ensuite répétées jusqu'à obtenir une réponse d'induction, ou perception de l'induction par l'élément magnéto-sensible, suffisamment proche d'une fonction prédéfinie.

L'invention est décrite dans ce qui précède à titre d'exemple. Il est entendu que l'homme du métier est à même de réaliser différentes variantes de l'invention sans pour autant sortir du cadre du brevet.

**Revendications**

1. Capteur de position analogique à réluctance variable, destiné à déterminer la variation de position d'une cible (1), comprenant une cible (1), constituée d'un matériau ferromagnétique et au moins un aimant (2), la cible et l'aimant définissant entre eux un entrefer (8), le dispositif comportant en outre un élément magnéto-sensible (3) détectant la variation d'induction occasionnée dans l'entrefer par le déplacement relatif de la cible (1) par rapport à l'aimant (2) **caractérisé en ce que** l'aimant (2) est aimanté selon une direction sensiblement perpendiculaire à la surface avant (9) de l'aimant délimitant un bord de l'entrefer (8), ledit aimant présentant une cavité (10) s'ouvrant sur ladite surface avant (9) de l'aimant, l'élément magnéto-sensible (3) étant logé dans ladite cavité (10) au plus près du point de «zéro gauss» , la cible (1) présentant une configuration géométrique déterminée pour que la variation d'induction en fonction de ladite position de la cible (1) corresponde à une fonction prédéfinie, la cible (1) présentant une forme particulière, ou optimisée, apte à fournir une induction B linéaire en fonction du déplacement de ladite cible (1).

2. Capteur de position analogique à réluctance variable, destiné à déterminer la position d'une cible (1) selon la revendication 1, **caractérisé en ce que** la cible (1) est mobile en translation suivant un axe perpendiculaire à l'axe d'aimantation dudit aimant (2).

3. Capteur de position analogique à réluctance variable, destiné à déterminer la position d'une cible (1) selon la revendication 1, **caractérisé en ce que** la cible (1) est mobile en translation suivant un axe parallèle à l'axe d'aimantation dudit aimant (2).

4. Capteur de position analogique à réluctance variable, destiné à déterminer la position d'une cible (1) selon la revendication 1, **caractérisé en ce que** la cible (1) est mobile en rotation autour d'un axe perpendiculaire à l'axe d'aimantation dudit aimant (2).

5. Capteur de position analogique à réluctance variable, destiné à déterminer la position d'une cible (1) selon la revendication 1, **caractérisé en ce que** la cible (1) est mobile en rotation autour d'un axe parallèle à l'axe d'aimantation dudit aimant (2).

6. Capteur de position analogique à réluctance variable, destiné à déterminer la position d'une cible (1) selon l'une quelconque des revendications précédentes, **caractérisé en ce que** le plan dans lequel s'effectue le déplacement de la cible (1) est compris dans un plan passant par le centre de l'élément magnéto-sensible (2).

7. Capteur de position analogique à réluctance variable, destiné à déterminer la position d'une cible (1) selon la revendication 1, **caractérisé en ce qu'**une pièce ferromagnétique est collée au dos du susdit aimant (2).

8. Capteur de position analogique à réluctance variable, destiné à déterminer la position d'une cible (1) selon la revendication 7, **caractérisé en ce que** le susdit aimant (2) est collé sur une pièce ferromagnétique en forme de T.

9. Capteur de position analogique à réluctance variable, destiné à déterminer la position d'une cible (1) selon la revendication 1, **caractérisé en ce que** l'élément magnéto-sensible (3) est placé dans la cavité dans une zone (4) d'induction minimale.

10. Capteur de position analogique à réluctance variable, destiné à déterminer la position d'une cible (1) selon la revendication 4,5 ou 6, **caractérisé en ce que** la cible (1) comprend au moins une dent spiralée (5).

11. Capteur de position analogique selon la revendication 11, **caractérisé en ce que** la cible (1) comprend trois dents spiralées (5), disposées chacune à un angle de 120.

12. Capteur de position analogique à réluctance variable, destiné à déterminer la position d'une cible (1) selon la revendication 11 ou 12, **caractérisé en ce que** la course angulaire mesurable maximale est proche de 360 .

13. Capteur de position analogique à réluctance variable, destiné à déterminer la position d'une cible (1) selon la revendication 2 ou 3, **caractérisé en ce que** la cible (1) présente une forme déterminée pour engendrer une variation d'épaisseur de l'entrefer fonction de la position relative par rapport à l'aimant (1).

14. Capteur de position analogique à réluctance variable, destiné à déterminer la position d'une cible (1) selon la revendication 3, **caractérisé en ce que** l'aimant (2) et l'élément magnéto-sensible (3) sont disposés en face d'une membrane ferromagnétique (6) apte à se déformer sous l'effet d'une force (7) appliquée verticalement à ladite membrane (6).

15. Capteur de position angulaire d'un arbre à came ou d'un vilebrequin, **caractérisé en ce qu'**il comporte un capteur de position analogique conforme à la revendication 4,5 ou 6.

16. Procédé pour la réalisation d'une cible (1) pour un capteur de position analogique conforme aux revendications 1 à 15, constituée par un matériau ferromagnétique, présentant un signal d'induction B désiré, **caractérisé en ce qu'**il comprend les étapes suivantes :

- établissement d'une première forme géométrique pour la susdite cible (1),
- positionnement de points sur la cible (1) ; ces points présentant des coordonnées (x, y) dans un plan voire des coordonnées spatiales (x, y, z),
- calcul du signal d'induction magnétique B en fonction du déplacement linéaire ou rotatif de la cible (1) ; le déplacement de la cible (1) étant effectué sur un parcours prédéfini,
- modification des coordonnées d'un des susdits points et recalcule de l'induction B en fonction de la position de la cible (1) pour déterminer l'influence de ce point sur l'induction B mesurée par au susdit aimant (2),
- détermination d'une matrice et résolution d'une équation apte à définir la nouvelle forme géométrique de la susdite première forme définie préalablement pour la cible (1),
- répétition des susdites étapes de calcul, modification et détermination jusqu'à l'obtention d'une induction magnétique B, en fonction du déplacement linéaire ou rotatif de la cible (1), satisfaisant, c'est-à-dire conforme aux critères de linéarité ou d'une fonction f (x) non linéaire souhaitées.

**Patentansprüche**

1. Analoger Positionssensor mit variabler Reluktanz zur Bestimmung der Positionsveränderung eines Ziels (1), welcher ein Ziel (1) umfasst, das aus einem ferromagnetischen Material und mindestens einem Magneten (2) besteht, wobei das Ziel und der Magnet untereinander einen Spalt (8) abgrenzen. Die Vorrichtung enthält außerdem ein magnetempfindliches Element (3), das die durch das relative Verschieben des Ziels (1) in Bezug auf den Magneten (2) verursachte Veränderung der Induktion im Spalt erkennt, **dadurch gekennzeichnet, dass** der Magnet (2) in einer im Wesentlichen senkrecht zur Stirnfläche (9) des Magneten verlaufenden Richtung, die einen Rand des Spaltes (8) begrenzt, magnetisiert ist, wobei besagter Magnet einen Hohlraum (10) aufweist, der sich zu besagter Stirnfläche (9) des Magneten hin öffnet, das magnetempfindliche Element (3) in besagtem Hohlraum (10) möglichst nahe an der "Gauss-Nullstelle" liegt, und das Ziel (1) einer bestimmten geometrischen Anordnung folgt, damit die Änderung der Induktion je nach Position des Ziels (1) einer vordefinierten Funktion entspricht, wobei das Ziel (1) eine besondere bzw. optimierte Form aufweist, die entsprechend der Bewegung besagten Ziels (1) eine lineare Induktion B liefern kann.

2. Analoger Positionssensor mit veränderlicher Reluktanz zur Bestimmung der Position eines Ziels (1) nach Anspruch 1, **dadurch gekennzeichnet, dass** das Ziel (1) auf einer senkrecht zur Magnetisierungsachse besagten Magnets (2) stehenden Achse translatorisch beweglich ist.

3. Analoger Positionssensor mit veränderlicher Reluktanz zur Bestimmung der Position eines Ziels (1) nach Anspruch 1, **dadurch gekennzeichnet, dass** das Ziel (1) auf einer parallel zur Magnetisierungsachse besagten Magnets (2) verlaufenden Achse translatorisch beweglich ist.

4. Analoger Positionssensor mit veränderlicher Reluktanz zur Bestimmung der Position eines Ziels (1) nach Anspruch 1, **dadurch gekennzeichnet, dass** sich das Ziel (1) um eine senkrecht zur Magnetisierungsachse besagten Magnets (2) stehende Achse drehen kann.

5. Analoger Positionssensor mit veränderlicher Reluktanz zur Bestimmung der Position eines Ziels (1) nach Anspruch 1, **dadurch gekennzeichnet, dass** sich das Ziel (1) um eine Achse parallel zur Magnetisierungsachse besagten Magnets (2) drehen kann.

6. Analoger Positionssensor mit veränderlicher Reluktanz zur Bestimmung der Position eines Ziels (1) nach einem der vorherigen Ansprüche, **dadurch gekennzeichnet, dass** die Ebene, auf der sich das Ziel (1) bewegt, auf einer Ebene liegt, die durch die Mitte des magnetempfindlichen Elements (2) läuft.

7. Analoger Positionssensor mit veränderlicher Reluktanz zur Bestimmung der Position eines Ziels (1) nach Anspruch 1, **dadurch gekennzeichnet, dass** ein ferromagnetisches Teil auf die Rückseite besagten Magneten (2) geklebt wird.

8. Analoger Positionssensor mit veränderlicher Reluktanz zur Bestimmung der Position eines Ziels (1) nach Anspruch 7, **dadurch gekennzeichnet, dass** besagter Magnet (2) auf ein t-förmiges ferromagnetisches Teil geklebt wird.

9. Analoger Positionssensor mit veränderlicher Reluktanz zur Bestimmung der Position eines Ziels (1) nach Anspruch 1, **dadurch gekennzeichnet, dass** das magnetempfindliche Element (3) im Hohlraum in einem Bereich (4) mit minimaler Induktion platziert wird.

10. Analoger Positionssensor mit veränderlicher Reluktanz zur Bestimmung der Position eines Ziels (1) nach Anspruch 4, 5 oder 6, **dadurch gekennzeichnet, dass** besagtes Ziel (1) mindestens einen spiralförmigen Zahn (5) umfasst.

11. Analoger Positionssensor nach Anspruch 11, **dadurch gekennzeichnet, dass** das Ziel (1) drei spiralförmige Zähne (5) umfasst, die jeweils in einem Winkel von 120° angeordnet sind.

12. Analoger Positionssensor mit veränderlicher Reluktanz zur Bestimmung der Position eines Ziels (1) nach Anspruch 11 oder 12, **dadurch gekennzeichnet, dass** die maximale messbare Winkelbeweglichkeit bei 360° liegt.

13. Analoger Positionssensor mit veränderlicher Reluktanz zur Bestimmung der Position eines Ziels (1) nach Anspruch 2 oder 3, **dadurch gekennzeichnet, dass** das Ziel (1) eine bestimmte Form aufweist, die eine Veränderung der Spaltbreite in Abhängigkeit von der relativen Position bezüglich des Magneten (1) bewirkt.

14. Analoger Positionssensor mit veränderlicher Reluktanz zur Bestimmung der Position eines Ziels (1) nach Anspruch 3, **dadurch gekennzeichnet, dass** der Magnet (2) und das magnetempfindliche Element (3) gegenüber einer ferromagnetischen Membran (6) angeordnet sind, die sich unter Einwirkung einer senkrecht auf besagte Membran (6) einwirkende Kraft verformen kann.

15. Winkelpositionssensor einer Nocken- oder einer Kurbelwelle, **dadurch gekennzeichnet, dass** er einen analogen Positionssensor gemäß Anspruch 4, 5 oder 6 aufweist.

16. Verfahren zur Herstellung eines Ziels (1) für einen analogen Positionssensor gemäß den Ansprüchen 1 bis 15, bestehend aus einem ferromagnetischen Material, das ein gewünschtes Induktionssignal B aufweist, **dadurch gekennzeichnet, dass** es folgende Schritte umfasst:

> - die Herstellung einer ersten geometrischen Form für obengenanntes Ziel (1),
> - die Positionierung von Punkten auf dem Ziel (1); diese Punkte sind Koordinaten (x, y) auf einer Ebene, bzw. räumliche Koordinaten (x, y, z),
> - die Berechnung des magnetischen Induktionssignals B unter Berücksichtigung der linearen oder sich drehenden Bewegung des Ziels (1), wobei die Bewegung des Ziels (1) auf einem vordefinierten Weg durchgeführt wird,
> - die Änderung der Koordinaten einer der oben genannten Punkte und die Neuberechnung der Induktion B unter Berücksichtigung der Position des Ziels (1) zur Bestimmung des Einflusses dieses Punkts auf die Induktion B, die an besagtem Magneten (2) gemessen wird,
> - Bestimmung einer Matrix und Auflösung einer Gleichung zur Definition der neuen geometrischen Form der oben genannten ersten Form, die zuvor für das Ziel (1) definiert wurde,
> - Wiederholung der oben genannten Schritte der Berechnung, Änderung und Bestimmung bis zum Erhalt einer zufriedenstellenden magnetischen Induktion B unter Berücksichtigung der linearen oder drehenden Bewegung des Ziels (1), die den gewünschten Kriterien der Linearität oder einer nicht linearen Funktion f (x) entspricht.

## Claims

1. A variable-reluctance analogue position sensor, intended to determine the variation in position of a target (1), comprising a target (1) consisting of a ferromagnetic material and at least one magnet (2), the target and the magnet defining between them an air gap (8), the device further comprising a magnetosensitive element (3) detecting the variation in induction caused in the air gap by the relative movement of the target (1) with respect to the magnet (2), **characterised in that** the magnet (2) is magnetised in a direction substantially perpendicular to the front surface (9) of the magnet delimiting an edge of the air gap (8), said magnet having a cavity (10) opening onto said front surface (9) of the magnet, the magnetosensitive element (3) being housed in said cavity (10) as close as possible to the "zero Gauss" point, the target (1) having a geometric configuration determined so that the variation in induction according to said position of the target (1) corresponds to a predefined function, the target (1) having a particular, or optimised, form able to supply a linear induction B according to the movement of said target (1).

2. A variable-reluctance analogue position sensor intended to determine the position of a target (1) according to claim 1, **characterised in that** the target (1) is able to move in translation along an axis perpendicular to the magnetisation axis of said magnet (2).

3. A variable-reluctance analogue position sensor intended to determine the position of a target (1) according to claim 1, **characterised in that** the target (1) is able to move in translation along an axis parallel to the magnetisation axis of said magnet (2).

4. A variable-reluctance analogue position sensor intended to determine the position of a target (1) according to claim 1, **characterised in that** the target (1) is able to move in rotation around an axis perpendicular to the magnetisation axis of said magnet (2).

**5.** A variable-reluctance analogue position sensor intended to determine the position of a target (1) according to claim 1, **characterised in that** the target (1) is able to move in rotation around an axis parallel to the magnetisation axis of said magnet (2).

**6.** A variable-reluctance analogue position sensor intended to determine the position of a target (1) according to any of the preceding claims, **characterised in that** the plane in which the movement of the target (1) takes place lies in a plane passing through the centre of the magnetosensitive element (2).

**7.** A variable-reluctance analogue position sensor intended to determine the position of a target (1) according to claim 1, **characterised in that** a ferromagnetic part is adhesively bonded to the back of the aforementioned magnet (2).

**8.** A variable-reluctance analogue position sensor intended to determine the position of a target (1) according to claim 7, **characterised in that** the aforementioned magnet (2) is adhesively bonded to a ferromagnetic part in a T shape.

**9.** A variable-reluctance analogue position sensor intended to determine the position of a target (1) according to claim 1, **characterised in that** the magnetosensitive element (3) is placed in the cavity in a minimum-induction zone (4).

**10.** A variable-reluctance analogue position sensor intended to determine the position of a target (1) according to claim 4, 5 or 6, **characterised in that** the target (1) comprises at least one helical tooth (5).

**11.** An analogue position sensor according to claim 11, **characterised in that** the target (1) comprises three helical teeth (5) each disposed at an angle of 120.

**12.** A variable-reluctance analogue position sensor intended to determine the position of a target (1) according to claim 11 or 12, **characterised in that** the maximum measurable angular travel is approximately 360.

**13.** A variable-reluctance analogue position sensor intended to determine the position of a target (1) according to claim 2 or 3, **characterised in that** the target (1) has a determined form so as to cause a variation in thickness of the air gap as a function of the relative position with respect to the magnet (1).

**14.** A variable-reluctance analogue position sensor intended to determine the position of a target (1) according to claim 3, **characterised in that** the magnet (2) and the magnetosensitive element (3) are disposed facing a ferromagnetic membrane (6) able to deform under the effect of a force (7) applied vertically to said membrane (6).

**15.** A sensor for sensing the angular position of a camshaft or of a crankshaft, **characterised in that** it comprises an analogue position sensor according to claim 4, 5 or 6.

**16.** Method for producing a target (1) for an analogue position sensor according to claims 1 to 15, consisting of a ferromagnetic material, having a required induction B signal, **characterised in that** it comprises the following steps:

- establishment of a first geometric form for the aforementioned target (1),
- positioning of points on the target (1); these points presenting the coordinates (x, y) in a plane or the spatial coordinates (x, y, z),
- computation of the magnetic induction B signal according to the linear or rotary movement of the target (1); the movement of the target (1) being effected over a predefined travel,
- modification of the coordinates of one of the aforementioned points and re-computation of the induction B according to the position of the target (1) in order to determine the influence of this point on the induction B measured by the aforementioned magnet (2),
- determination of a matrix and solution of an equation able to define the new geometric form of the aforementioned first form defined previously for the target (1),
- repetition of the aforementioned computation steps, modification and determination until a magnetic induction B is obtained, according to the linear or rotary movement of the target (1), satisfying, that is to say in accordance with, the required criteria of linearity or of a non-linear function f (x).

Figure 1

Figure 2

Direction déplacement

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

**EP 1 549 910 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2670286
- EP 0665416 A
- FR 2735222
- FR 2734913
- FR 2724722
- US 4785242 A
- DE 19503075